# EUROPÄISCHE PATENTSCHRIFT

(11) **EP 0 792 570 B1**
(45) Veröffentlichungstag und Bekanntmachung des Hinweises auf die Patenterteilung: **31.10.2001**
(21) Anmeldenummer: 96909050.5
(22) Anmeldetag: 16.04.1996
(51) Int. Cl.: H05B 41/38, H05B 41/295

(54) **SCHALTUNGSANORDNUNG FÜR START UND BETRIEB EINER MIT GESTEUERTEM WECHSELSTROM BETRIEBENEN HOCHDRUCK-GASENTLADUNGSLAMPE**
CIRCUIT FOR STARTING AND OPERATING A HIGH-PRESSURE GAS DISCHARGE LAMP OPERATED BY A CONTROLLED A.C. CURRENT
CIRCUIT POUR LA MISE EN SERVICE ET LE FONCTIONNEMENT D'UNE LAMPE A DECHARGE A HAUTE PRESSION FONCTIONNANT PAR UN COURANT C.A COMMANDE

(30) Priorität: 20.09.1995 DE 19534861
(43) Veröffentlichungstag der Anmeldung: 03.09.1997
(73) Patentinhaber: ROBERT BOSCH GMBH, 70442 Stuttgart (DE)
(72) Erfinder: KERN, Robert, D-77887 Sasbachwalden (DE)
(86) Internationale Anmeldenummer: DE9600656
(87) Internationale Veröffentlichungsnummer: WO9711584

(56) Entgegenhaltungen:
- EP-A- 0 471 332
- EP-A- 0 594 880
- EP-A- 0 618 754
- DE-A- 4 136 486

## Beschreibung

### Stand der Technik

Die Erfindung geht aus von einer Schaltungsanordnung für Start und Betrieb einer mit gesteuertem Wechselstrom betriebenen Hochdruck-Gasentladungslampe, insbesondere für den Einsatz in Kraftfahrzeugscheinwerfern, der im Oberbegriff des Anspruchs 1 definierten Gattung.

Aus der DE 41 36 486 A1 ist ein Vorschaltgerät zum Starten und Betreiben von Wechselstrom-Hochdruck-Gasentladungslampen bekannt, welches aus einer Gleichspannungsquelle, z.B. der Batterie eines Kraftfahrzeuges gespeist wird. Dabei wird mittels eines DC/DC Wandlers zunächst aus der Gleichspannung der Gleichspannungsquelle eine stabilisierte und /oder leistungsgeregelte Gleichspannung erzeugt, die einen höheren Spannungswert hat. Dann wird aus dieser Spannung mit Hilfe einer gesteuerten Vollbrückenschaltung der für den Betrieb erforderliche Wechselstrom erzeugt. Die Vollbrückenschaltung kann sowohl im Gleichstrom- als auch im Wechselstrombetrieb betrieben werden. Die Steuerung der Vollbrückenschaltung erfolgt von einer Steuerschaltung und für die Zündung der Hochdruck-Gasentladungslampe ist eine Zündvorrichtung vorgesehen.

Bei diesem bekannten Vorschaltgerät wird zur Erzielung eines schnellen und zuverlässigen Zündens sowie schnelles und zuverlässiges Erreichen eines stabilen Brennzustandes ohne Flackern der Lampe, die Brückenschaltung bei Inbetriebnahme im Gleichstrombetrieb betrieben. Über eine Statusbestimmeinrichtung wird ein Signal erzeugt, wenn die Hochdruck-Gasentladungslampe erfolgreich gezündet wurde. Dieses Signal wird über eine Verzögerungsschaltung der Steuerschaltung für die Vollbrückenschaltung zugeführt und sorgt dafür, daß erst nach der gegebenen Verzögerungszeit die Vollbrückenschaltung von Gleichstrombetrieb in den Wechselstrombetrieb umgeschaltet wird.

Generell besteht bei mit Wechselstrom betriebenen Hochdruck-Gasentladungslampen, insbesondere bei kalten Lampen, das Problem darin, daß während des Umpolvorganges die Hochdruck-Gasentladungslampe verlischt und diese nach dem Umpolen anschließend wieder gezündet werden muß. Die dazu erforderliche Wiederzündspannung bestimmt die notwendige Leerlaufspannung der Versorgungsschaltung, d.h. hier der am Ausgang der Vollbrückenschaltung anstehenden Spannung.

### Vorteile der Erfindung

Die erfindungsgemäße Schaltungsanordnung für Start und Betrieb einer mit gesteuertem Wechselstrom betriebenen Hochdruck-Gasentladungslampe mit den kennzeichnenden Merkmalen des Anspruchs 1 hat demgegenüber den Vorteil, die Leerlaufspannung der Versorgungsschaltung gering zu halten. Dadurch wird das Kosten-Nutzen-Verhältnis der gesamten Schaltungsanordnung günstiger.

Gemäß der Erfindung wird dies prinzipiell durch adaptive Anpassung der Halbwellenzeiten an die momentane Temperatur der Elektroden der Hochdruck-Gasentladungslampe erreicht. In kennzeichnender Weise ist dazu vorgesehen, daß die Steuerschaltung die Vollbrückenschaltung derart steuert, daß die Dauer der Halbwellenphasen des die Hochdruck-Gasentladungslampe versorgenden Wechselstroms variabel ist und daß diese Variabilität in Abhängigkeit von der jeweiligen Temperatur der Elektroden der Hochdruck-Gasentladungslampe gewählt ist.

Durch die in den weiteren Ansprüchen niedergelegten Maßnahmen sind vorteilhafte Weiterbildungen und Verbesserungen der im Anspruch 1 angegebenen Schaltungsanordnung möglich.

Gemäß einer besonders vorteilhaften Ausgestaltung der Erfindung ist die Dauer der Halbwellenphasen sowohl während des Starts als während des Betriebs der Hochdruck-Gasentladungslampe variabel.

In vorteilhafter und besonders zweckmäßiger Ausgestaltung der Erfindung ist zur Ermittlung der Temperatur der Elektroden der Hochdruck-Gasentladungslampe in der Steuerschaltung die Hochdruck-Gasentladungslampe als Modell nachgebildet. In zweckmäßiger Weise ist zur annähernden Bildung des Modells der Hochdruck-Gasentladungslampe ein Verzögerungsglied erster Ordnung vorgesehen.

In weiterer vorteilhafter Ausgestaltung der Erfindung stellt die Steuerschaltung die Länge der Halbwellen mit Hilfe einer Funktion ein, die sowohl von der ermittelten augenblicklichen Temperatur der Elektroden der Hochdruck-Gasentladungslampe als auch vom Lampenstrom abhängig ist. Dabei ist vorteilhafterweise die Funktion so gewählt, daß die Temperatur der Elektroden der Hochdruck-Gasentladungslampe direkt vor dem Umpolen immer konstant ist.

In vorteilhafter Weiterbildung der Erfindung enthält die Steuerschaltung einen Mikrokontroller, der die notwendigen Steuerimpulsfolgen generiert. Darüber hinaus ist in zweckmäßiger Weise vorgesehen, daß ein ASIC mit dem Mikrokontroller verbunden ist, um die anwendungsspezifische Anpassung an das jeweilige Steuerungsprofil zur Verfügung zu stellen.

### Zeichnung

Die Erfindung ist anhand eines in der Zeichnung dargestellten Ausführungsbeispiels in der nachfolgenden Beschreibung näher erläutert. Es zeigt:

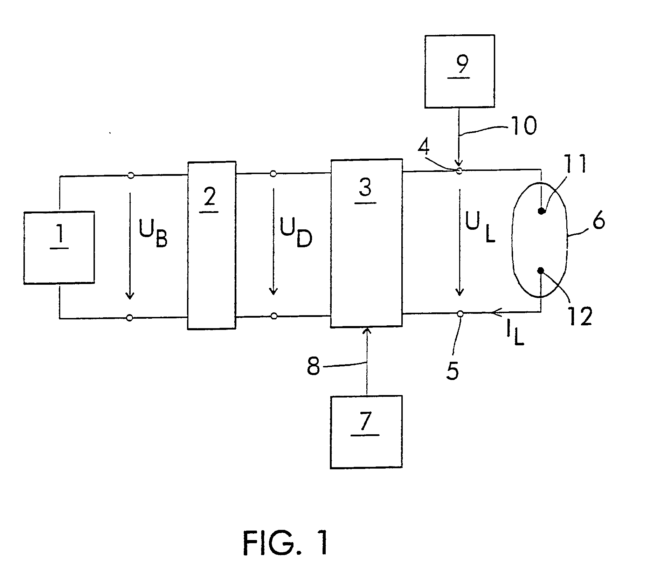

- Fig. 1: schematisch ein Blockschaltbild, in dem die erfindungsgemäße Schaltungsanordnung realisiert ist.

### Beschreibung des Ausführungsbeispiels

In Fig. 1 ist an Hand eines Blockschaltbilds schematisch eine Schaltungsanordnung dargestellt, in der die Erfindung realisiert ist. Mit 1 ist eine Gleichspannungsquelle bezeichnet, welche die Batterie eines Kraftfahrzeuges sein kann. Sie gibt an ihren Ausgangsklemmen die Spannung U_{B} ab. Diese Spannung U_{B} wird von einem Gleichspannungs-/Gleichspannungswandler 2 (DC/DC Wandler) auf einen höheren Wert gebracht bzw. gewandelt. Dieser höhere Spannungswert U_{D} steht an den Ausgangsklemmen des DC/DC Wandlers 2 an. Sie bildet die Eingangsspannung zu einer gesteuerten Vollbrückenschaltung 3, die daraus einen gesteuerten Wechselstrom bzw. eine Wechselspannung generiert. Diese Wechselspannung steht an den Ausgangsklemmen 4 und 5 an und bildet die Versorgungsspannung U_{L} einer Hochdruck-Gasentladungslampe 6. Zur Steuerung der Vollbrückenschaltung 3 ist eine Steuerschaltung 7 vorgesehen, die ihre Steuerimpulse über mit dem Pfeil angedeutete Leitungen 8 einspeist. Weiterhin ist eine Zündschaltung 9 vorgesehen, die über mit einem Pfeil symbolisierte Leitung 10 die Zündspannung über die Klemme 4 der Hochdruck-Gasentladungslampe 6 zuführt.

Gemäß der Erfindung wird die Vollbrückenschaltung 3 von der Steuerschaltung 7 derart gesteuert, daß die Dauer der Halbwellenphasen der Lampenspannung U_{L} bzw. des Lampenstroms I_{L} variabel ist. Dabei wird die Variabilität in Abhängigkeit von der jeweiligen Temperatur der Elektroden 11 und 12 der Hochdruck-Gasentladungslampe 6 gewählt. Die Dauer der Halbwellenphasen wird vorteilhafterweise sowohl während des Starts, also des Zündvorgangs, als auch während des Betriebs der Hochdruck-Gasentladungslampe 6 variabel gestaltet.

Bei Hochdruck-Gasentladungslampen wird die Wiederzündspannung davon bestimmt, wie die Temperatur der Elektroden 11 und 12 ist. Heiße Elektroden emittieren mehr Elektronen als kalte. Je heißer also die Elektroden 11 und 12 beim Wiederzünden sind, desto geringer ist die erforderliche Wiederzündspannung nach dem Umpolen.

Zur Ermittlung der Temperatur der Elektroden 11 und 12 der Hochdruck-Gasentladungslampe 6 ist gemäß der Erfindung in der Steuerschaltung 7 die Hochdruck-Gasentladungslampe 6 als Modell nachgebildet. Dabei ist das Modell so beschaffen, daß es eine ausreichend genaue Nachbildung der momentan vorhandenen Elektrodentemperatur ermöglicht. Dies kann z.B. in vorteilhafter Weise durch ein Verzögerungsglied erster Ordnung erfolgen.

Die Steuerschaltung 7 stellt die Länge der Halbwellen mittels einer Funktion ein. Diese Funktion ist sowohl von der ermittelten augenblicklichen Temperatur der Elektroden 11 und 12 der Hochdruck-Gasentladungslampe 6 als auch von deren Lampenstrom I_{L} abhängig. Zweckmäßig ist die Funktion so gewählt, daß die Temperatur der Elektroden 11 und 12 der Hochdruck-Gasentladungslampe 6 direkt vor dem Umpolen immer konstant ist. Wenn die der Elektroden 11 und 12 der Hochdruck-Gasentladungslampe 6 kalt sind, werden sie länger in einer Richtung mit Strom versorgt als im heißen Fall.

In vorteilhafter Ausgestaltung ist vorgesehen, daß die Steuerschaltung 7 einen Mikrokontroller enthält, mit dem die notwendigen Steuerimpulsfolgen erzeugt werden. Zweckmäßig ist der Mikrokontroller mit einem ASIC, einem anwendungsspezifizierten intergrierten Schaltkreis, verbunden. Damit kann auf einfache Weise die anwendungsspezifische Anpassung an das jeweilige Steuerungsprofil und die beabsichtigte Anwendung erfolgen und somit dann der Steuerschaltung 7 zur Verfügung gestellt werden.

Mittels der Erfindung werden in vorteilhafter Weise die Halbwellenzeiten der Lampenversorgungsspannung U_{L} adaptiv an die momentane Temperatur der Elektroden 11 und 12 der Hochdruck-Gasentladungslampe 6 angepaßt. Dadurch wird es ermöglicht, die Leerlaufspannung der Versorgungsschaltung gering zu halten, wodurch das Kosten-Nutzen-Verhältnis verbessert wird.

## Patentansprüche

1. Schaltungsanordnung für Start und Betrieb einer mit gesteuertem Wechselstrom betriebenen Hochdruck-Gasentladungslampe (6), insbesondere für den Einsatz in Kraftfahrzeugscheinwerfern, bei welcher mittels eines Gleichspannungs-/Gleichspannungswandlers (2) die Spannung (U_{B}) einer Gleichspannungsquelle (1) auf einen höheren Wert gewandelt wird und aus dieser Spannung (U_{B}) mittels einer gesteuerten Vollbrückenschaltung (3), die sowohl im Gleichstrom- als auch im Wechselstrombetrieb betrieben werden kann, ein gesteuerter Wechselstrom (I_{L}) generiert wird mit dem die Hochdruck-Gasentladungslampe (6) versorgt wird, und bei welcher eine Steuerschaltung (7) vorgesehen ist, mit der die Vollbrückenschaltung (3) angesteuert wird, sowie eine Zündvorrichtung (9) zum Zünden der Hochdruck-Gasentladungslampe (6) vorgesehen ist,
**dadurch gekennzeichnet, daß**
die Steuerschaltung (7) die Vollbrückenschaltung (3) derart steuert, daß die Dauer der Halbwellenphasen des die Hochdruck-Gasentladungslampe (6) versorgenden Wechselstroms (I_{L}) variabel ist und daß diese Variabilität in Abhängigkeit von der jeweiligen Temperatur der Elektroden (11, 12) der Hochdruck-Gasentladungslampe (6) gewählt ist.

2. Schaltungsanordnung nach Anspruch 1, **dadurch gekennzeichnet, daß** die Dauer der Halbwellenphasen sowohl während des Starts als während des Betriebs der Hochdruck-Gasentladungslampe (6) variabel ist.

3. Schaltungsanordnung nach Anspruch 1 oder 2, **dadurch gekennzeichnet, daß** zur Ermittlung det Temperatur der Elektroden (11, 12) der Hochdruck-Gasentladungslampe (6) in der Steuerschaltung (7) die Hochdruck-Gasentladungslampe (6) als Modell nachgebildet ist.

4. Schaltungsanordnung nach Anspruch 3, **dadurch gekennzeichnet, daß** zur annähernden Bildung des Modells der Hochdruck-Gasentladungslampe (6) ein Verzögerungsglied erster Ordnung in der Steuerschaltung (7) vorgesehen ist.

5. Schaltungsanordnung nach einem der vorigen Ansprüche, **dadurch gekennzeichnet, daß** die Steuerschaltung (7) die Länge der Halbwellen mit Hilfe einer Funktion einstellt, die sowohl von der ermittelten augenblicklichen Temperatur der Elektroden (11, 12) der Hochdruck-Gasentladungslampe (6) als auch vom Lampenstrom (I_{L}) abhängig ist.

6. Schaltungsanordnung nach Anspruch 5, **dadurch gekennzeichnet, daß** die Funktion so gewählt ist, daß die Temperatur der Elektroden (11, 12) der Hochdruck-Gasentladungslampe (6) direkt vor dem Umpolen immer konstant ist.

7. Schaltungsanordnung nach einem der vorigen Ansprüche, **dadurch gekennzeichnet, daß** die Steuerschaltung (7) einen Mikrokontroller enthält, der die notwendigen Steuerimpulsfolgen generiert.

8. Schaltungsanodnung nach Anspruch 7, **dadurch gekennzeichnet, daß** ein ASIC mit dem Mikrokontroller verbunden ist, um die anwendungsspezifische Anpassung an das jeweilige Steuerungsprofil zur Verfügung zu stellen.

## Claims

1. Circuit arrangement for starting and operating a high-pressure gas discharge lamp (6) operated by a controlled alternating current, in particular for use in motor vehicle headlights, in the case of which circuit arrangement the voltage (U_{B}) of a DC voltage source (1) is transformed to a higher value by means of a DC-DC converter (2), and a controlled full-bridge circuit (3), which can be operated both in DC mode and in AC mode, uses this voltage (U_{B}) to generate a controlled alternating current (I_{L}) with which the high-pressure gas discharge lamp (6) is supplied, and in the case of which circuit arrangement a control circuit (7) is provided by means of which the full-bridge circuit (3) is driven, and an ignition device (9) is provided for igniting the high-pressure gas discharge lamp (6), **characterized in that** the control circuit (7) controls the full-bridge circuit (3) in such a way that the duration of the half-wave phases of the alternating current (I_{L}) supplying the high-pressure gas discharge lamp (6) is variable, and **in that** this variability is selected as a function of the respective temperature of the electrodes (11, 12) of the high-pressure gas discharge lamp (6).

2. Circuit arrangement according to Claim 1, **characterized in that** the duration of the half-wave phases is variable both during the start and during the operation of the high-pressure gas discharge lamp (6).

3. Circuit arrangement according to Claim 1 or 2, **characterized in that**, for the purpose of determining the temperature of the electrodes (11, 12) of the high-pressure gas discharge lamp (6), the high-pressure gas discharge lamp (6) is simulated as a model in the control circuit (7).

4. Circuit arrangement according to Claim 3, **characterized in that** a time-delay element of first order is provided in the control circuit (7) for the purpose of approximately forming the model of the high-pressure gas discharge lamp (6).

5. Circuit arrangement according to one of the preceding claims, **characterized in that** the control circuit (7) sets the length of the half waves with the aid of a function which depends both on the determined instantaneous temperature of the electrodes (11, 12) of the high-pressure gas discharge lamp (6) and on the lamp current (I_{L}).

6. Circuit arrangement according to Claim 5, **characterized in that** the function is selected such that the temperature of the electrodes (11, 12) of the high-pressure gas discharge lamp (6) is always constant directly before polarity reversal.

7. Circuit arrangement according to one of the preceding claims, **characterized in that** the control circuit (7) includes a microcontroller which generates the required control pulse trains.

8. Circuit arrangement according to Claim 7, **characterized in that** an ASIC is connected to the microcontroller in order to make available application-specific adaptation to the respective control profile.

## Revendications

1. Circuit pour la mise en service et le fonctionnement d'une lampe à décharge de gaz haute pression (6) alimentée par un courant alternatif commandé, en particulier pour utilisation dans des projecteurs d'automobile, dans laquelle,
- un convertisseur (2) de tension continue à tension continue transforme la tension (U_{B}) d'une source de courant continu (1) en une tension plus élevée (U_{D}) à partir de laquelle un circuit à pont intégral (3) commandé, pouvant fonctionner en courant continu comme en courant alternatif, génère un courant alternatif (I_{L}) commandé, alimentant la lampe (6), et
- il est prévu un circuit de commande (7) pilotant le circuit à pont intégral (3) et également un dispositif d'allumage (9) pour allumer la lampe (6),
**caractérisé en ce que**
le circuit de commande (7) pilote le circuit à pont intégral (3) de manière que la durée des demi-périodes du courant alternatif (I_{L}) alimentant la lampe à décharge (6) peut varier, et que sa variabilité est choisie en fonction de la température à chaque instant des électrodes (11, 12) de la lampe à décharge (6).

2. Circuit selon la revendication 1,
**caractérisé en ce que**
la durée des demi-périodes est variable à la fois pendant le démarrage et pendant le fonctionnement de la lampe à décharge (6).

3. Circuit selon la revendication 1 ou 2,
**caractérisé en ce que**
pour définir la température des électrodes (11, 12) de la lampe à décharge (6), un modèle de cette lampe est reproduit dans le circuit de commande (7) de la lampe (6).

4. Circuit selon la revendication 3,
**caractérisé en ce que**
pour obtenir une forme approchée du modèle de la lampe à décharge (6), il est prévu dans le circuit de commande (7) un organe de temporisation du premier ordre.

5. Circuit selon l'une quelconque des revendications précédentes,
**caractérisé en ce que**
le circuit de commande (7) règle la longueur des demi-périodes à l'aide d'une fonction qui dépend à la fois de la température, établie à chaque instant, des électrodes ( 11, 12) de la lampe (6), et du courant alimentant la lampe (I_{L}).

6. Circuit selon la revendication 5,
**caractérisé en ce que**
la fonction est choisie de manière que la température des électrodes (11, 12) de la lampe à décharge (6), avant l'inversion de polarité, est toujours constante.

7. Circuit selon l'une des revendications précédentes,
**caractérisé en ce que**
le circuit de commande (7) comprend un microcontrôleur qui génère les séries d'impulsions nécessaires.

8. Circuit selon la revendication 7,
**caractérisé en ce que**
un ASIC est relié au microcontrôleur, afin de mettre l'adaptation spécifique à l'utilisation à la disposition de chaque profil de commande.
